# EUROPEAN PATENT SPECIFICATION

(11) **EP 4 471 761 B1**
(45) Date of publication and mention of the grant of the patent: **25.11.2026**
(21) Application number: 22923691.4
(22) Date of filing: 26.01.2022
(51) Int. Cl.: B60R 16/037, B60K 35/00, B60K 35/10, G01C 21/36, G06F 3/01, G10L 15/00, G10L 15/10, G10L 15/22

(54) **VOICE RECOGNITION METHOD AND VOICE RECOGNITION DEVICE**
SPRACHERKENNUNGSVERFAHREN UND SPRACHERKENNUNGSVORRICHTUNG
PROCÉDÉ DE RECONNAISSANCE VOCALE ET DISPOSITIF DE RECONNAISSANCE VOCALE

(43) Date of publication of application: 04.12.2024
(73) Proprietor: NISSAN MOTOR CO., LTD., Kanagawa 221-0023 (JP); RENAULT S.A.S., 92100 Boulogne-Billancourt (FR)
(72) Inventor: KAMINUMA, Atsunobu, Atsugi-shi, Kanagawa 243-0123 (JP)
(74) Representative: Osha BWB
(86) International application number: PCT/IB2022/000056
(87) International publication number: WO 2023/144574

(56) References cited:
- JP-A- 2006 343 829
- JP-A- 2015 089 697
- JP-A- 2019 127 192
- JP-A- 2019 183 504
- JP-A- 2020 060 861
- JP-A- 2020 060 861
- JP-A- 2020 126 166
- US-A1- 2020 251 108
- US-A1- 2021 347 328
- US-B2- 10 847 150

## Description

### Technical Field

The present invention relates to a voice recognition method and a voice recognition device.

### Background Art

In recent years, voice input systems that, using voice recognition, respond to a question from a user and perform operation of a device have been proposed.

For example, patent document JP 6668296 B describes a lighting device for vehicle that, when detecting that a user asks a question about an operation method of an air conditioner, illuminates a switch of the air conditioner and moves a pointer displayed in the illuminated area along an operation direction of the switch.

US 2021/347328 A1 discloses for example a method for performing commands in a vehicle using speech and image recognition. A voice command comprising a vehicular operation command and a reference to an object within the interior of the vehicle is received, a positional region of an object (for example an occupant) within the interior of the vehicle is located based on a received image by means of a neural network, and the operation is caused to be performed in the vehicle at the positional region of the object.

### Summary of Invention

### Technical Problem

According to the voice input system, to a question asked by the user of the vehicle by voice, meaning of a constituent object constituting the vehicle (for example, meaning of a lamp) or an operation method (an operation method of a switch) can be returned as an answer.

In such a voice input system, it is necessary to accurately identify a constituent object that the user mentioned. However, it is sometimes difficult to utter a feature distinct enough to accurately identify a constituent object (for example, a lamp or a switch). For example, when the user is performing other work, such as a case of driving a vehicle, appropriate utterance is sometimes difficult.

An object of the present invention is to, in voice recognition in which a constituent object mentioned in utterance content of a user among a plurality of constituent objects constituting a vehicle is estimated, improve estimation precision of the constituent object mentioned in the utterance content.

### Solution to Problem

According to the present invention, there is provided a voice recognition method and device according to claims 1 and 10 respectively.

### Advantageous Effects of Invention

According to an aspect of the present invention, it is possible to, in voice recognition in which a constituent object mentioned in utterance content of a user among a plurality of constituent objects constituting a vehicle is estimated, improve estimation precision of the constituent object mentioned in the utterance content.

The object and advantages of the invention will be realized and attained by means of the elements and combinations particularly pointed out in the claims. It is to be understood that both the foregoing general description and the following detailed description are exemplary and explanatory and are not restrictive of the invention.

### Brief Description of Drawings

FIG. 1 is a schematic configuration diagram of an example of a vehicle that includes a voice recognition device of an embodiment;
FIG. 2 is a block diagram illustrative of an example of a functional configuration of the voice recognition device of the embodiment;
FIG. 3 is a schematic diagram of an example of constituent objects constituting the vehicle;
FIG. 4 is a schematic diagram of another example of the constituent objects constituting the vehicle;
FIG. 5 is a schematic diagram of an example of constituent object position information; and
FIG. 6 is a flowchart of an example of a voice recognition method of the embodiment.

### Description of Embodiments

### (Configuration)

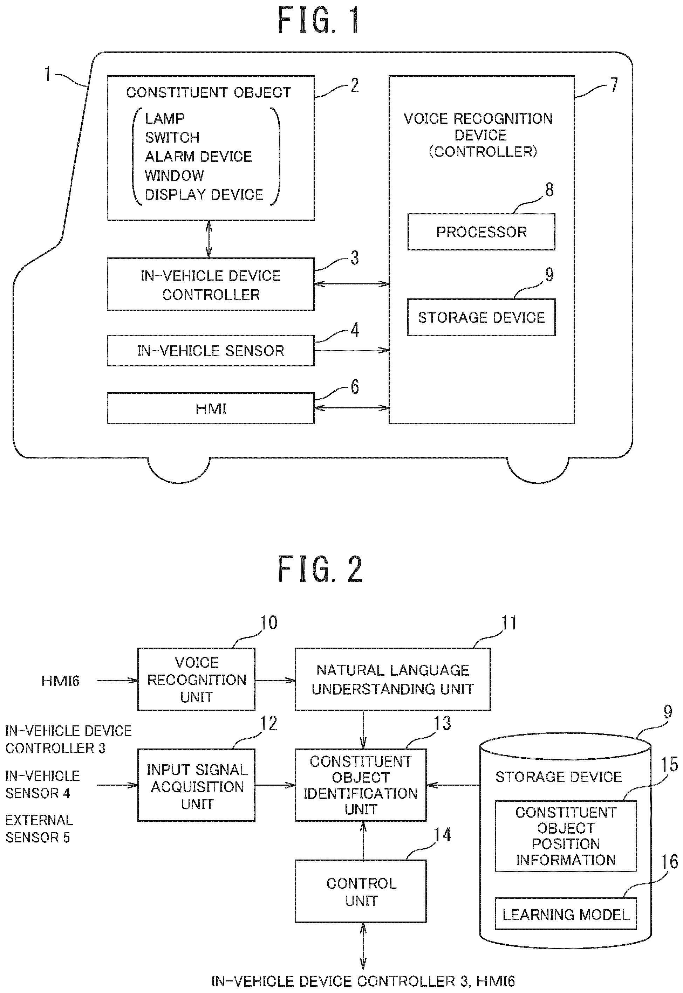

FIG. 1 is a schematic configuration diagram of an example of a vehicle that includes a voice recognition device of an embodiment. A vehicle 1 includes constituent objects 2 constituting the vehicle 1, an in-vehicle device controller 3, an in-vehicle sensor 4, a human-machine interface (hereinafter, referred to as "HMI") 6, and a voice recognition device 7.

The constituent objects 2 are various types of in-vehicle devices that are mounted on the vehicle 1 and that constitute the vehicle 1.

For example, a constituent object 2 may be a meter cluster on an instrument panel in front of a driver seat of the vehicle 1 or a lamp, such as a warning lamp and an indicator lamp, that is arranged around an A-pillar. For example, a constituent object 2 may be a display device (display) installed on a center cluster or a center console. The lamp and the display device are examples of a device that is installed inside the vehicle 1 and that presents visual information to a user.

In addition, for example, a constituent object 2 may be, for example, an alarm device that outputs an alarm sound to the user of the vehicle 1. The alarm device is an example of a device that is installed inside the vehicle and that presents audio information to the user.

In addition, for example, a constituent object 2 may be a navigation system that sets a travel route, based on a current position of the vehicle 1 measured by a positioning device (for example, a global navigation satellite system (GNSS) receiver) and map information and that performs route guidance for a passenger in accordance with the travel route.

In addition, for example, a constituent object 2 may be a window installed in a door of the vehicle 1.

The in-vehicle device controller 3 is an electronic control unit (ECU) that controls operation of the constituent objects 2, which are in-vehicle devices, and generates control signals to control the constituent objects 2. The in-vehicle device controller 3 includes, for example, a processor and peripheral components, such as a storage device. The processor may be, for example, a central processing unit (CPU) or a micro-processing unit (MPU).

The storage device may include a semiconductor storage device, a magnetic storage device, an optical storage device, or the like. The storage device may include registers, a cache memory, and a memory, such as a read only memory (ROM) and a random access memory (RAM), that is used as a main storage device.

Note that the in-vehicle device controller 3 may be formed using dedicated hardware for performing various types of information processing that will be described below. For example, the in-vehicle device controller 3 may include a functional logic circuit that is implemented in a general-purpose semiconductor integrated circuit. For example, the in-vehicle device controller 3 may include a programmable logic device (PLD), such as a field-programmable gate array (FPGA), and the like.

The in-vehicle sensor 4 is a sensor that detects a state of the inside of the vehicle 1. For example, the in-vehicle sensor 4 may be an in-vehicle camera that captures an image of the inside of the vehicle 1, a pressure sensor or a seat belt sensor that is installed in a seat and is to determine whether or not a passenger is seated, a biosensor that detects biometric information of a passenger, or a microphone that detects a sound generated from the vehicle 1.

The HMI 6 is an interface device that transfers information between the voice recognition device 7 and the user. The HMI 6 includes a display device that is visually recognizable by the user of the vehicle 1 (for example, a display screen of a navigation system) and a speaker or a buzzer to output an alarm sound, a notification sound, and voice information.

In addition, the HMI 6 includes a voice input device (for example, a microphone) that acquires voice input from the user.

The voice recognition device 7 is an electronic control unit that operates as a controller performing voice recognition to recognize utterance content of the user of the vehicle 1. The voice recognition device 7 estimates a constituent object 2 mentioned in the utterance content of the user and provides the user with information related to the mentioned constituent object 2 by outputting the information from the HMI 6. Alternatively, the voice recognition device 7 causes the constituent object 2 mentioned in the utterance content of the user to operate.

The voice recognition device 7 includes a processor 8 and peripheral components, such as a storage device 9. The processor 8 may be, for example, a CPU or an MPU.

The storage device 9 may include a semiconductor storage device, a magnetic storage device, an optical storage device, or the like. The storage device 9 may include registers, a cache memory, and a memory, such as a ROM and a RAM, that is used as a main storage device. Functions of the voice recognition device 7, which will be described below, are achieved by, for example, the processor 8 executing computer programs stored in the storage device 9.

Note that the voice recognition device 7 may be formed using dedicated hardware for performing various types of information processing that will be described below. For example, the voice recognition device 7 may include a functional logic circuit that is implemented in a general-purpose semiconductor integrated circuit. For example, the voice recognition device 7 may include a programmable logic device, such as a field-programmable gate array, and the like.

FIG. 2 is a block diagram illustrative of an example of a functional configuration of the voice recognition device 7. The voice recognition device 7 functions as a voice recognition unit 10, a natural language understanding unit 11, an input signal acquisition unit 12, a constituent object identification unit 13, and a control unit 14.

The voice recognition unit 10 recognizes voice input from the user that the HMI 6 acquired and converts the voice input to language information, such as a text. The voice recognition unit 10 outputs the language information generated by converting the voice input, to the natural language understanding unit 11.

The natural language understanding unit 11 analyzes language information output from the voice recognition unit 10 through natural language processing and extracts utterance intention of the user and a keyword related to a constituent object 2 mentioned by the user. For example, the natural language understanding unit 11 extracts, as a keyword related to the constituent object 2, a keyword indicating a position of the constituent object 2 mentioned in utterance content. The position that a keyword extracted from the utterance content indicates (that is, a position indicating the position of the constituent object 2) is an example of a "mentioned position" described in the claims.

For example, keywords and synonyms thereof may be defined in advance, and a synonym included in utterance content of the user may be converted to a corresponding keyword.

For example, when in order to question the meaning of a turned-on lamp, the user utters, "What is the lamp above the meters?", the natural language understanding unit 11 extracts an utterance intention "inquiry of meaning" to inquire about meaning of a constituent object and extracts "meter", "above", and "lamp" as keywords.

In this case, it is only required that, for example, "measuring instrument", "indicator", "meter", and the like are defined in advance as synonyms of the keyword "meter", "upper side", "immediately above", "above", and the like are defined in advance as synonyms of the keyword "above", and "warning lamp", "indicator lamp", and the like are defined in advance as synonyms of the keyword "lamp".

In addition, utterance intentions of the user that the natural language understanding unit 11 extracts include, in addition to the "inquiry of meaning", various utterance intentions, such as an operation instruction to instruct an operation of an in-vehicle device, which is a constituent object 2 (for example, "opening of a window").

In addition, for example, the natural language understanding unit 11 extracts, as keywords indicating a position of a constituent object 2 mentioned in the utterance content, a keyword indicating a position serving as a reference (hereinafter, sometimes referred to as "reference position") to indicate the position of the constituent object 2 and a keyword indicating a relative position of the constituent object 2 with respect to the reference position. For example, in the afore-described example, the natural language understanding unit 11 extracts "meter" as a keyword indicating a reference position and extracts "above" as a keyword indicating a relative position of the constituent object 2 with respect to the reference position (the position of the meter).

For example, a keyword indicating the reference position may be a constituent object other than the constituent object 2 mentioned in the utterance content. For example, in the above-described example of utterance, a constituent object 2 mentioned in the utterance content is one of the lamps, and a constituent object 2 serving as the reference position is a meter that is a constituent object 2 other than the lamps.

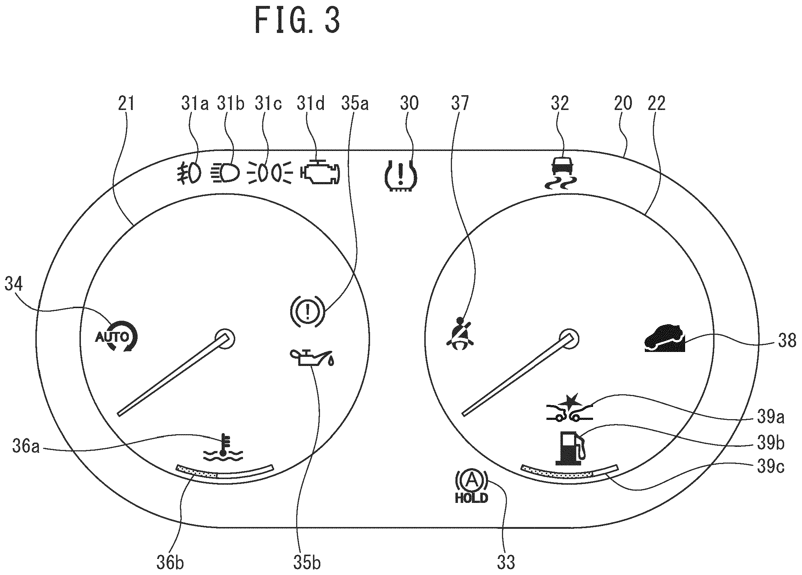

FIG. 3 is a schematic diagram of an example of an arrangement of lamps and meters that are examples of the constituent objects 2. In a meter cluster 20, a plurality of lamps and meters as well as a tachometer 21 and a speedometer 22 are arranged. Hereinafter, the meter cluster 20 is simply referred to as "meters 20".

In the example in FIG. 3, as a lamp above the meters 20, a tire pressure warning lamp 30 is arranged. In addition, as lamps on the upper left side of the meters 20 or lamps above the tachometer 21, a fog lamp indicator lamp 31a, a high beam warning lamp 31b, a headlight indicator lamp 31c, and an engine warning lamp 31d are arranged. In addition, as a lamp on the upper right side of the meters 20 or a lamp above the speedometer 22, a vehicle dynamics control (VDC) warning lamp 32 is arranged. In addition, as a lamp on the lower left side of the speedometer, an automatic brake hold indicator lamp 33 is arranged.

In addition, as lamps inside the tachometer 21, an idling stop indicator lamp 34, a brake warning lamp 35a, an oil pressure warning lamp 35b, and a low water temperature indicator lamp 36a are arrange. As a meter inside the tachometer 21, an HEV power meter 36b is arranged.

In addition, as lamps inside the speedometer 22, a seat belt warning lamp 37, a hill descent control indicator lamp 38, a misstep collision prevention assist OFF indicator lamp 39a, and a fuel remaining amount warning lamp 39b are arranged. As a meter inside the speedometer 22, a fuel meter 39c is arranged.

For example, when in order to question the meaning of the tire pressure warning lamp 30, the user utters, "What is the lamp above the meters?", the natural language understanding unit 11 may extract keywords "meter", "above", and "lamp". The keyword "meter" is a keyword that indicates a reference position for indicating a position of a constituent object 2, and the keyword "above" is a keyword that indicates a relative position of the constituent object 2 with respect to the reference position (the position of the meters 20).

In addition, for example, when in order to question the meaning of the automatic brake hold indicator lamp 33, the user utters, "What is the lamp on the lower left side of the speedometer?", the natural language understanding unit 11 may extract keywords "speedometer", "lower left", and "lamp". The keyword "speedometer" is a keyword that indicates a reference position for indicating a position of a constituent object 2, and the keyword "lower left" is a keyword that indicates a relative position of the constituent object 2 with respect to the reference position (the position of the speedometer 22).

In addition, for example, when in order to question the meaning of the oil pressure warning lamp 35b, the user utters, "What is the lamp under the lamp with an exclamation mark?", the natural language understanding unit 11 may extract keywords "exclamation mark", "lamp", and "under". The keywords "exclamation mark" and "lamp" are keywords that indicate a reference position for indicating a position of a constituent object 2, and, in the example in FIG. 3, indicate the brake warning lamp 35a. The keyword "under" is a keyword that indicates a relative position of the constituent object 2 with respect to the reference position (the position of the brake warning lamp 35a).

In addition, for example, when in order to question the meaning of the engine warning lamp 31d, the user utters, "What is the rightmost lamp in the row of lamps including the indicator lamps of the lights?", the natural language understanding unit 11 may extract keywords "light", "lamp", "row", and "rightmost". The keywords "light", "lamp", and "row" are keywords that indicate a reference position for indicating a position of a constituent object 2, and, in the example in FIG. 3, indicate an arrangement of the fog lamp indicator lamp 31a, the high beam warning lamp 31b, and the headlight indicator lamp 31c. The keyword "rightmost" is a keyword that indicates a relative position of the constituent object 2 with respect to the reference position (the position of the arrangement of the lamps 31a to 31c).

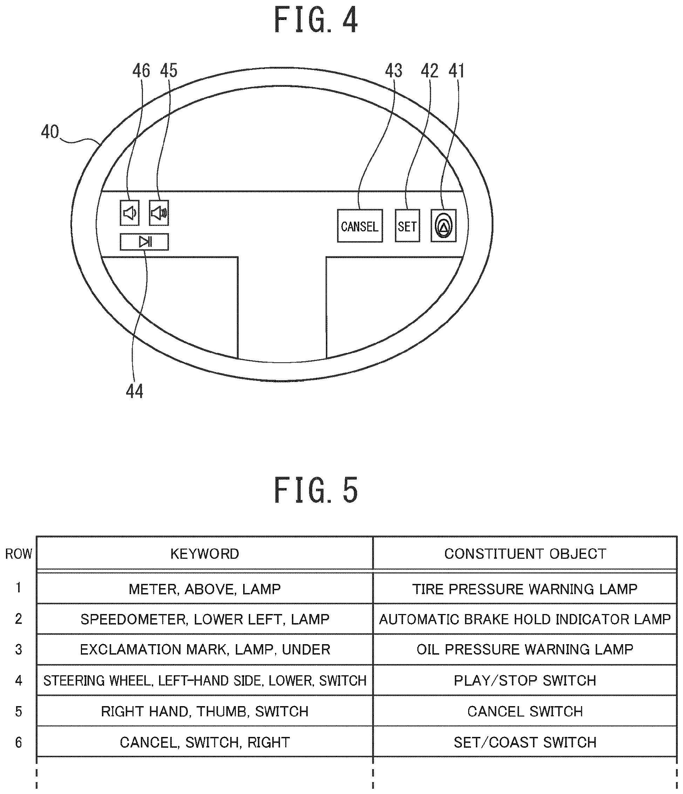

FIG. 4 is a schematic diagram of an example of an arrangement of steering wheel switches that are other examples of the constituent objects 2. Steering wheel switches 41 to 46 are switches installed on a steering wheel 40.

For example, the steering wheel switches 41 to 43 are a switch group for using an autonomous travel control function of the vehicle 1. For example, the rightmost switch 41 on the right-hand side of the steering wheel 40 is a main switch that turns on and off the autonomous travel control function of the vehicle 1. The center switch 42 on the right-hand side of the steering wheel 40 is a set/coast switch that starts the autonomous travel control function. The leftmost switch 43 on the right-hand side of the steering wheel 40 is a cancel switch 43 that cancels the autonomous travel control function. The cancel switch 43 is a switch that is located in a vicinity of the thumb of the right hand of the user when the user grasps the steering wheel 40 (that is, the user puts the fingers on the steering wheel 40).

In addition, for example, the steering wheel switches 44 to 46 are a switch group for using an audio function of the vehicle 1. For example, the switch 44 in the lower row on the left-hand side of the steering wheel 40 is a play/stop switch that instructs start or stop of reproduction of a music reproduced by the audio function of the vehicle 1. The rightmost switch 45 on the left-hand side of the steering wheel 40 is a volume switch that increases sound volume of the audio function of the vehicle 1. The volume switch 45 is a switch that is located in a vicinity of the thumb of the left hand of the user when the user grasps the steering wheel 40. The leftmost switch 46 on the left-hand side of the steering wheel 40 is another volume switch that reduces the sound volume of the audio function of the vehicle 1.

For example, when in order to question the meaning of the play/stop switch 44, the user utters, "What is the switch in the lower row on the left-hand side of the steering wheel?", the natural language understanding unit 11 may extract keywords "steering wheel", "left-hand side", "lower", and "switch". The keyword "steering wheel" is a keyword that indicates a reference position for indicating a position of a constituent object 2, and the keywords "left-hand side" and "lower" are keywords that indicate a relative position of the constituent object 2 with respect to the reference position (the position of the steering wheel 40).

In addition, for example, the keyword indicating the reference position may be a finger of the user when the user grasps the steering wheel 40. For example, when in order to question the meaning of the cancel switch 43, the user utters, "What is the switch around the thumb of my right hand?", the natural language understanding unit 11 may extract keywords "right hand", "thumb", and "switch". The keywords "right hand" and "thumb" are keywords that indicate a reference position for indicating a position of a constituent object 2, and, in the example in FIG. 4, indicate the thumb of the right hand of the user that is placed on the steering wheel 40.

In addition, for example, when in order to question the meaning of the set/coast switch 42, the user utters, "What is the switch on the right-hand side of the cancel switch?", the natural language understanding unit 11 may extract keywords "cancel", "switch", and "right". The keywords "cancel" and "switch" are keywords that indicate a reference position for indicating a position of a constituent object 2, and, in the example in FIG. 4, indicate the cancel switch 43. The keyword "right" is a keyword that indicates a relative position of the constituent object 2 with respect to the reference position (the position of the cancel switch 43).

In addition, the natural language understanding unit 11 may extract a keyword indicating a state of a constituent object 2 in an auxiliary manner. For example, when in order to question the meaning of a warning lamp, the user utters, "What does the lamp that has just been turned on mean?", the natural language understanding unit 11 may extract "turned on" as a keyword indicating a state of the constituent object 2. In addition, for example, when in order to question the meaning of an alarm sound that the alarm device output, the user utters, "What does the bleep that has sounded on the front left side means?", the natural language understanding unit 2 may extract a keyword "bleep" that indicates a state of the constituent object 2.

The natural language understanding unit 11 outputs information about extracted utterance intention and information about extracted keywords to the constituent object identification unit 13.

FIG. 2 is now referred to. The input signal acquisition unit 12 acquires a control signal of each constituent object 2 (in-vehicle device) that the in-vehicle device controller 3 generated, as an input signal. For example, the control signal may be a turning-on/off signal of a lamp. In addition, for example, the control signal may be a signal that instructs output or suspension of an alarm sound by the alarm device. In addition, the control signal may be a drive signal that opens or closes a window installed in a door of the vehicle 1 or a state signal that indicates an open state or a closed state of a window.

In addition, the input signal acquisition unit 12 acquires an output signal of the in-vehicle sensor 4 as an input signal.

The input signal acquisition unit 12 converts an acquired control signal of a constituent object 2 and an acquired output signal of the in-vehicle sensor 4 to signals in a specific data form that is determined in advance to represent a detected situation.

For example, the input signal acquisition unit 12 may convert a control signal to flag information and set a value of a flag according to a control state of a constituent object 2.

For example, the input signal acquisition unit 12 may convert a control signal to flag information that is set to a value "True" when a target lamp is in a turned-on state and to a value "False" when the target lamp is in a turned-off state. In addition, for example, the input signal acquisition unit 12 may convert a control signal to flag information that is set to the value "True" when the alarm device operates and outputs an alarm sound and to the value "False" when the alarm device does not operate. In addition, for example, the input signal acquisition unit 12 may convert a control signal to flag information that is set to the value "True" when a window is in the open state and to the value "False" when the window is in the closed state.

In addition, the input signal acquisition unit 12 may convert an output signal of the in-vehicle sensor 4 to flag information and set a value of a flag according to a state or a position of an object that the in-vehicle sensor 4 detected.

For example, the input signal acquisition unit 12 may set a flag according to a seating position of the user inside the vehicle that is detected based on an output signal of the in-vehicle sensor 4, such as the in-vehicle camera, the pressure sensor, the seat belt sensor, and the biosensor. For example, the input signal acquisition unit 12 may set a value of the flag to "True" when the user is seated on the driver seat, and set the value of the flag to "False" when the user is seated on a passenger seat.

The input signal acquisition unit 12 outputs the input signal after conversion (hereinafter, simply referred to as "input signal") to the constituent object identification unit 13.

The constituent object identification unit 13 receives information about utterance intention and information about keywords output from the natural language understanding unit 11. The constituent object identification unit 13 estimates a constituent object 2 mentioned in utterance content, based on a keyword that is output from the natural language understanding unit 11 and that indicates a position of the constituent object 2. Hereinafter, a constituent object 2 mentioned in utterance content is referred to as "target constituent object".

For example, the constituent object identification unit 13 may estimate a target constituent object with reference to information about a constituent object position that is a position at which each constituent object 2 is installed. For example, the storage device 9 of the voice recognition device 7 may store constituent object position information 15 that is information about constituent object positions.

FIG. 5 is a schematic diagram of an example of the constituent object position information 15. In the constituent object position information 15, records in a plurality of rows are stored. In each record, information about a constituent object and keywords relating to the constituent object are recorded. That is, in the constituent object position information 15, information about constituent objects and keywords relating to the constituent objects are stored in association with each other.

The keywords stored in the constituent object position information 15 include at least a keyword indicating a position of a constituent object, as information about a constituent object position. The constituent object identification unit 13 estimates, as a target constituent object, a constituent object 2 that is stored in the constituent object position information 15 in association with a keyword that fits (for example, matches) a keyword output from the natural language understanding unit 11. That is, the constituent object identification unit 13 estimates, as a target constituent object, a constituent object 2 that is installed at a constituent object position that fits (for example, matches) a mentioned position mentioned in the utterance content.

For example, a case is assumed where the user utters, "What is the lamp above the meters?" and the natural language understanding unit 11 extracts keywords "meter", "above", and "lamp". The keywords "meter" and "above" are keywords that indicate a mentioned position. The constituent object identification unit 13 selects, with reference to the constituent object position information 15, a record in the first row including the same keywords as the keywords "meter", "above", and "lamp", which the natural language understanding unit 11 extracted, and estimates the tire pressure warning lamp 30 included in the record in the first row to be a target constituent object.

In addition, for example, a case is assumed where the user utters, "What is the lamp on the lower left side of the speedometer?" and the natural language understanding unit 11 extracts keywords "speedometer", "lower left", and "lamp". The keywords "speedometer" and "lower left" are keywords that indicate a mentioned position. The constituent object identification unit 13 selects, with reference to the constituent object position information 15, a record in the second row including the same keywords as the keywords "speedometer", "lower left", and "lamp", which the natural language understanding unit 11 extracted, and estimates the automatic brake hold indicator lamp 33 included in the record in the second row to be a target constituent object.

In addition, for example, a case is assumed where the user utters, "What is the lamp under the lamp with an exclamation mark?" and the natural language understanding unit 11 extracts keywords "exclamation mark", "lamp", and "under". The keywords "exclamation mark", "lamp", and "under" are keywords that indicate a mentioned position. The constituent object identification unit 13 selects, with reference to the constituent object position information 15, a record in the third row including the same keywords as the keywords "exclamation mark", "lamp", and "under", which the natural language understanding unit 11 extracted, and estimates the oil pressure warning lamp 35b included in the record in the third row to be a target constituent object.

In addition, for example, a case is assumed where the user utters, "What is the switch in the lower row on the left-hand side of the steering wheel?" and the natural language understanding unit 11 extracts keywords "steering wheel", "left-hand side", "lower", and "switch". The keywords "steering wheel", "left-hand side", and "lower" are keywords that indicate a mentioned position. The constituent object identification unit 13 selects, with reference to the constituent object position information 15, a record in the fourth row including the same keywords as the keywords "steering wheel", "left-hand side", "lower", and "switch", which the natural language understanding unit 11 extracted, and estimates the play/stop switch 44 included in the record in the fourth row to be a target constituent object.

In addition, for example, a case is assumed where the user utters, "What is the switch around the thumb of my right hand?" and the natural language understanding unit 11 extracts keywords "right hand", "thumb", and "switch". The keywords "right hand" and "thumb" are keywords that indicate a mentioned position. The constituent object identification unit 13 selects, with reference to the constituent object position information 15, a record in the fifth row including the same keywords as the keywords "right hand", "thumb", and "switch", which the natural language understanding unit 11 extracted, and estimates the cancel switch 43 included in the record in the fifth row to be a target constituent object. Note that in this case, although the natural language understanding unit 11 extracts the keywords "right hand" and "thumb" that indicate a reference position for indicating a position of a constituent object 2, no keyword that indicates a relative position with respect to the reference position "thumb of my right hand" is extracted. In this case, the relative position of the reference position with respect to the constituent object position is a "vicinity", and it is not necessary to indicate the relative position, using a keyword.

In addition, for example, a case is assumed where the user utters, "What is the switch on the right-hand side of the cancel switch?" and the natural language understanding unit 11 extracts keywords "cancel", "switch", and "right". The keywords "cancel", "switch", and "right" are keywords that indicate a mentioned position. The constituent object identification unit 13 estimates, with reference to the constituent object position information 15, the set/coast switch 42 that is a constituent object in a record in the sixth row including the same keywords as the keywords "cancel", "switch", and "right", which the natural language understanding unit 11 extracted, to be a target constituent object.

Note that as in a case where the user utters, "What is the lamp above the tachometer that has just been turned on?", there is a case where keywords "tachometer" and "above", which indicate a position, correspond (apply) to a plurality of constituent objects 2 (in this example, the fog lamp indicator lamp 31a, the high beam warning lamp 31b, the headlight indicator lamp 31c, and the engine warning lamp 31d).

In this case, the constituent object identification unit 13 may estimate, based on an input signal output from the input signal acquisition unit 12, which one of the plurality of constituent objects 2 is a target constituent object. For example, the constituent object identification unit 13 may extract a keyword indicating a state of the constituent object 2 from the utterance content and estimate a constituent object 2 that is in the same control state as the state indicated by the extracted keyword to be the target constituent object.

In the above-described example, when a keyword "turned on" that indicates a state of a constituent object 2 is extracted from the utterance content "has just been turned on", the constituent object identification unit 13 may select, from among the fog lamp indicator lamp 31a, the high beam warning lamp 31b, the headlight indicator lamp 31c, and the engine warning lamp 31d that correspond to the keywords "tachometer" and "above", a lamp that is in the turned-on state, based on input signals and estimate the selected lamp to be the target constituent object.

In addition, the constituent object identification unit 13 may identify, based on a time series of keywords that are acquired from the natural language understanding unit 11, a mentioned position mentioned in the utterance content. For example, the constituent object identification unit 13 may identify the mentioned position, based on a time series of target constituent objects that are estimated by keywords acquired from the natural language understanding unit 11. For example, when after the constituent object identification unit 13 estimates the cancel switch 43 to be a target constituent object, based on the utterance content "What is the switch around the thumb of my right hand?", the user utters, "What is the switch on the right-hand side of that switch?", the constituent object identification unit 13 may identify a position of the target constituent object (the cancel switch 43) estimated from the previous utterance content to be a reference position, based on a keyword "that" indicating a demonstrative and estimate the set/coast switch 42, which is located on the right-hand side of the reference position (the cancel switch 43), to be the target constituent object.

The constituent object identification unit 13 may estimate, based on a position at which the user can hear an audio signal of a constituent object 2 that presents audio information to the user, a target constituent object presenting the audio information. For example, when the user utters, "What does a sound I've heard from the right-hand side speaker mean?" and the natural language understanding unit 11 extracts keywords "right-hand side", "speaker", and "sound", the constituent object identification unit 13 may estimate the navigation system, which presents route guidance as audio information, to be the target constituent object.

In addition, for example, when the user utters, "What does a sound I've heard from the front mean?" and the natural language understanding unit 11 extracts keywords "front" and "sound", the constituent object identification unit 13 may estimate the alarm device, which presents an alarm sound to the user, to be the target constituent object.

In addition, for example, when the user utters, "What does a sound generated on the right rear side mean?" and the natural language understanding unit 11 extracts keywords "right rear" and "sound", the constituent object identification unit 13 may estimate a rear lateral-side vehicle approach alarm device to be the target constituent object.

Further, the constituent object identification unit 13 may identify a relative position of a constituent object 2 with respect to the seating position of the user as a mentioned position. In this case, the constituent object identification unit 13 determines, based on an input signal output from the input signal acquisition unit 12, the seating position of the user. The constituent object identification unit 13 may identify, based on a determination result of the seating position of the user and a keyword that is extracted from the utterance content of the user and that is to indicate a relative position, a mentioned position mentioned in the utterance content.

For example, when the user is determined to be seated on the driver seat, based on an input signal, the user utters, "Open here.", and a keyword "here" that indicates a relative position is extracted, the mentioned position is a position in a vicinity of the driver seat. Therefore, the constituent object identification unit 13 may estimate a window on the driver seat side to be the target constituent object.

In addition, for example, when the user is determined to be seated on the driver seat, the user utters, "Open the opposite side.", and a keyword "opposite side" that indicates a relative position is extracted, the mentioned position is a position in a vicinity of a passenger seat located on the opposite side in the vehicle width direction of the driver seat. Therefore, the constituent object identification unit 13 may estimate a window on the passenger seat side to be the target constituent object.

In addition, the constituent object identification unit 13 may estimate a mentioned position, based on a time series of target constituent objects that are estimated by keywords acquired from the natural language understanding unit 11. For example, a case is assumed where after the constituent object identification unit 13 estimates the window on the driver seat side to be a target constituent object, based on the utterance content "Open here.", the user utters, "Open the rear one, too". In this case, the constituent object identification unit 13 may identify the position of the target constituent object estimated from the previous utterance content (the window on the driver seat side) to be a reference position and estimate, based on a keyword "rear" that is extracted from the utterance content this time and that indicates a relative position, a window in the rear of the window on the driver seat side to be the target constituent object.

In addition, for example, when the user of a right-hand drive vehicle is determined to be seated on the driver seat and the user utters "the display on the left-hand side" or "the switch on the left-hand side", the mentioned position is located on the left-hand side of a right-hand seat, that is, at a position in a vicinity of the center in the vehicle width direction. Therefore, the constituent object identification unit 13 may estimate a switch or a display arranged on the center console to be the target constituent object.

Note that when a target constituent object is estimated based on a relative position of a constituent object 2 with respect to a seating position of the user, for example, it is only required to, with respect to each constituent object 2, store a plurality of records that differ according to the seating position of the user and store, in each record, a keyword indicating a relative position based on the seating position.

The constituent object identification unit 13 outputs information about the estimated target constituent object and information about the utterance intention output from the natural language understanding unit 11, to the control unit 14.

Note that the constituent object identification unit 13 may estimate a target constituent object with reference to a learning model 16 that has learned constituent object positions in place of the constituent object position information 15. As the learning model 16, various identifiers, such as a neural network and a rule-based (tree structure) inference model, can be used.

When the learning model 16 is caused to learn constituent object positions, by using keywords indicating constituent object positions (for example, keywords indicating reference positions and keywords indicating relative positions) as example data and giving training data obtained by combining the example data with correct labels (that is, target constituent objects) to the learning model 16, the learning model 16 is trained in such a way as to output correct labels with respect to the example data.

When an input signal that the input signal acquisition unit 12 outputs is used for estimation of a target constituent object, keywords and input signals may be used as example data.

Note that although in FIG. 2, both the constituent object position information 15 and the learning model 16 are described, the voice recognition device 7 does not have to include both the constituent object position information 15 and the learning model 16. The learning model 16 may be omitted when the voice recognition device 7 includes the constituent object position information 15, and the constituent object position information 15 may be omitted when the voice recognition device 7 includes the learning model 16.

The control unit 14 generates a response to an utterance of the user, based on a target constituent object that the constituent object identification unit 13 identifies and information about utterance intention that the natural language understanding unit 11 extracts and that is input via the constituent object identification unit 13.

For example, when utterance intention that the natural language understanding unit 11 extracted is "inquiry of meaning", the control unit 14 may control the HMI 6 to output information relating to an estimated target constituent object. For example, the control unit 14 outputs a response message that notifies information relating to the target constituent object and a command signal that causes the HMI 6 to output the response message. The HMI 6 may output and display sound information and text information of the response message from the speaker and on the display device, respectively.

The information relating to a target constituent object may be, for example, function information relating to a function of the target constituent object. For example, when the target constituent object is the main switch 41, the control unit 14 may output, as function information, a response message "This is a switch to turn on or off the autonomous travel control function".

The information relating to a target constituent object may be, for example, operation information relating to an operation to use a function of the target constituent object. For example, when the target constituent object is the set/coast switch 42, the control unit 14 may output, as operation information, a response message "In order to start the autonomous travel control function, turn on the main switch first, and then press the set/coast switch".

In addition, for example, when utterance intention that the natural language understanding unit 11 extracted is an operation instruction instructing an operation of an in-vehicle device (for example, "opening of a window"), the control unit 14 may cause an estimated target constituent object to operate. For example, when the utterance content is "Open here.", the control unit 14 outputs a command signal to open the window on the driver seat side where the user is seated to the in-vehicle device controller 3. The in-vehicle device controller 3 opens the window on the driver seat side in accordance with the command signal.

Note that when the control unit 14 causes a target constituent object to operate as a response to an utterance intention, the control unit 14 may output, from the HMI 6, a notification prompting the user to input whether or not the target constituent object is caused to operate.

For example, when the constituent object identification unit 13 cannot uniquely determine a target constituent object from utterance content of the user and estimates a plurality of candidates of the target constituent object, the control unit 14 may output, from the HMI 6, a notification prompting the user to input whether or not an estimated candidate is caused to operate. For example, when the utterance intention of the user is opening of a window and whether the target constituent object is the window on the driver seat or the window on the passenger seat cannot be discriminated, the control unit 14 may output a notification "Do you want the window on the driver seat side to be opened?", which prompts the user to input whether or not the target constituent object is caused to operate.

### (Operation)

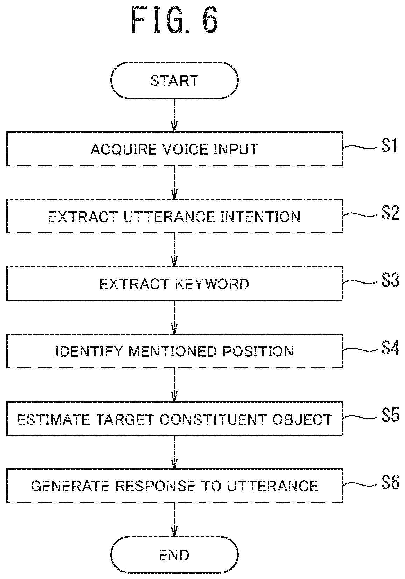

FIG. 6 is a flowchart of an example of a voice recognition method of the embodiment.

In step S1, the HMI 6 acquires voice input from the user.

In step S2, the voice recognition unit 10 recognizes the voice input from the user and converts the voice input to language information, such as a text. The natural language understanding unit 11 analyzes the language information output from the voice recognition unit 10 through natural language processing and extracts utterance intention of the user. In step S3, the natural language understanding unit 11 extracts a keyword indicating a position of a constituent object 2 from the language information output from the voice recognition unit 10.

In step S4, the natural language understanding unit 11 identifies a mentioned position that is a position mentioned in utterance content.

In step S5, the constituent object identification unit 13 estimates, based on the mentioned position that is mentioned in the utterance content, a target constituent object mentioned in the utterance content.

In step S6, the control unit 14 generates a response to the utterance of the user, based on the target constituent object that the constituent object identification unit 13 identified and information about the utterance intention that the natural language understanding unit 11 extracted. Subsequently, the process terminates.

### (Advantageous Effects of Embodiment)

(1) The voice recognition device 7 acquires utterance content of a user of a vehicle and estimates a target constituent object that is a constituent object mentioned in the utterance content among a plurality of constituent objects constituting the vehicle. The voice recognition device 7 performs processing of identifying, based on the utterance content, a mentioned position that is a position mentioned in the utterance content and processing of, with reference to a storage device storing constituent object positions each of which is a position at which one of a plurality of constituent objects is installed or a learning model that has learned the constituent object positions, estimating, as a target constituent object, a constituent object that is installed at a constituent object position matching the identified mentioned position.
   Because of this configuration, in voice recognition in which a constituent object mentioned in the utterance content of the user among the plurality of constituent objects constituting the vehicle is estimated, estimation precision of the constituent object mentioned in the utterance content can be improved.
(2) A constituent object may be a device that is installed inside the vehicle and that presents visual information to the user. Because of this configuration, whether or not the device presenting visual information is mentioned in the utterance content can be estimated.
(3) A constituent object may be a device that is installed inside the vehicle and that presents audio information to the user. Because of this configuration, whether or not the device presenting audio information is mentioned in the utterance content can be estimated.
(4) According to the invention, the voice recognition device 7 identifies, as a mentioned position, a relative position of a constituent object with respect to a meter installed on an instrumental panel of the vehicle. The voice recognition device 7 identifies as a mentioned position, a relative position of a constituent object with respect to a lamp installed on the instrumental panel of the vehicle. The voice recognition device 7 identifies, as a mentioned position, a relative position of a constituent object with respect to the steering wheel of the vehicle. The voice recognition device 7 identifies, as a mentioned position, a relative position of a constituent object with respect to a switch installed on the steering wheel of the vehicle. The voice recognition device 7 identifies, as a mentioned position, a relative position of a constituent object with respect to a position of a finger of the user when the finger is placed on the steering wheel of the vehicle.

In addition, the voice recognition device 7 may detect a user position that is a position of the user inside the vehicle and identify a mentioned position, based on the utterance content and the user position.

Because of this configuration, a target constituent object can be estimated using a keyword indicating a relative position that is included in the utterance content of the user.

(5) The voice recognition device 7 may output information relating to an estimated target constituent object. For example, the voice recognition device 7 may output function information relating to a function of the estimated target constituent object. For example, the voice recognition device 7 may output operation information relating to an operation to use a function of the estimated target constituent object.

Because of this configuration, information about the constituent object mentioned in the utterance content of the user can be provided.

(6) The voice recognition device 7 may cause a target constituent object estimated based on an estimation result of the target constituent object to operate. Because of this configuration, a constituent object constituting the vehicle can be caused to operate by voice input.

(7) The voice recognition device 7 may output a notification prompting the user to input whether or not a target constituent object is caused to operate. Because of this configuration, when, for example, a target constituent object cannot be uniquely determined from the utterance content of the user and a plurality of candidates of a target constituent object are estimated, it is possible to cause the user to confirm a target constituent object from among the estimation results.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the invention is defined in the appended claims.

### Reference Signs List

- 1: Vehicle
- 2: Constituent object
- 3: In-vehicle device controller
- 4: In-vehicle sensor
- 6: Human-machine interface
- 7: Voice recognition device
- 8: Processor
- 9: Storage device
- 10: Voice recognition unit
- 11: Natural language understanding unit
- 12: Input signal acquisition unit
- 13: Constituent object identification unit
- 14: Control unit
- 15: Constituent object position information
- 16: Learning model

## Claims

1. A voice recognition method for acquiring utterance content of a user of a vehicle (1) and estimating a target constituent object, the target constituent object being a constituent object mentioned in the utterance content among a plurality of constituent objects constituting the vehicle, the voice recognition method causing a controller to perform processing comprising:
identifying (S4) as a mentioned position, based on the utterance content, a relative position of the constituent object with respect to a meter or a lamp installed on an instrumental panel of the vehicle, with respect to a steering wheel (40) of the vehicle, with respect to a switch installed on the steering wheel (40) of the vehicle, or with respect to a position of a finger of the user when the finger is placed on the steering wheel (40) of the vehicle, the mentioned position being a position mentioned in the utterance content; and
with reference to a storage device storing (9) constituent object positions, each of the constituent object positions being a position at which one of the plurality of constituent objects is installed, or a learning model (16) having learned the constituent object positions, estimating (S5), as the target constituent object, a constituent object installed at the constituent object position matching the identified mentioned position.

2. The voice recognition method according to claim 1, wherein the constituent object is a device installed inside the vehicle and configured to present visual information to the user.

3. The voice recognition method according to claim 1, wherein the constituent object is a device installed inside the vehicle and configured to present audio information to the user.

4. The voice recognition method according to any one of claims 1 to 3, wherein the controller outputs information relating to the estimated target constituent object.

5. The voice recognition method according to claim 4, wherein the controller outputs function information relating to a function of the estimated target constituent object.

6. The voice recognition method according to claim 4, wherein the controller outputs operation information relating to an operation to use a function of the estimated target constituent object.

7. The voice recognition method according to claim 1, wherein the controller causes, based on an estimation result of the target constituent object, the estimated target constituent object to operate.

8. The voice recognition method according to claim 7, wherein the controller outputs a notification prompting the user to input whether or not the target constituent object is caused to operate.

9. The voice recognition method according to any one of claims 1 to 8, wherein
the controller
detects a user position, the user position being a position of the user inside the vehicle (1), and
identifies, based on the utterance content and the user position, the mentioned position.

10. A voice recognition device (7) configured to acquire utterance content of a user of a vehicle (1) and estimate a target constituent object, the target constituent object being a constituent object mentioned in the utterance content among a plurality of constituent objects constituting the vehicle, the voice recognition device including a controller (7) configured to perform processing comprising:
identifying (S4) as a mentioned position, based on the utterance content, a relative position of the constituent object with respect to a meter or a lamp installed on an instrumental panel of the vehicle, with respect to a steering wheel (40) of the vehicle, with respect to a switch installed on the steering wheel (40) of the vehicle, or with respect to a position of a finger of the user when the finger is placed on the steering wheel (40) of the vehicle, the mentioned position being a position mentioned in the utterance content; and
with reference to a storage device (9) storing constituent object positions, each of the constituent object positions being a position at which one of the plurality of constituent objects is installed, or a learning model (16) having learned the constituent object positions, estimating (S5), as the target constituent object, a constituent object installed at the constituent object position matching the identified mentioned position.

## Patentansprüche

1. Ein Verfahren zur Spracherkennung zum Erfassen eines Äußerungsinhalts eines Benutzers eines Fahrzeugs (1) und zum Schätzen eines Zielbauteils, wobei das Zielbauteil ein im Äußerungsinhalt erwähntes Bauteil unter einer Vielzahl von Bauteilen ist, die das Fahrzeug bilden, wobei das Verfahren zur Spracherkennung eine Steuerung veranlasst, eine Verarbeitung durchzuführen, die Folgendes umfasst:
Identifizieren (S4) einer relativen Position des Bauteils in Bezug auf ein Messinstrument oder eine Lampe, die in einer Instrumententafel des Fahrzeugs installiert sind, in Bezug auf ein Lenkrad (40) des Fahrzeugs, in Bezug auf einen auf dem Lenkrad (40) des Fahrzeugs installierten Schalter oder in Bezug auf eine Position eines Fingers des Benutzers, wenn der Finger auf dem Lenkrad (40) des Fahrzeugs positioniert ist, als erwähnte Position auf der Grundlage des Äußerungsinhalts, wobei die erwähnte Position eine im Äußerungsinhalt erwähnte Position ist; und
Schätzen (S5) eines an der Bauteilposition installierten Bauteils, die der identifizierten erwähnten Position entspricht, als Zielbauteil unter Bezugnahme auf eine Speichervorrichtung (9), die Bauteilpositionen speichert, wobei jede der Bauteilpositionen eine Position ist, an der eines der Vielzahl von Bauteilen installiert ist, oder auf ein Lernmodell (16), das die Bauteilpositionen erlernt hat.

2. Das Verfahren zur Spracherkennung gemäß Anspruch 1, wobei das Bauteil eine im Fahrzeuginnenraum installierte Vorrichtung ist, die dazu konfiguriert ist, dem Benutzer visuelle Informationen bereitzustellen.

3. Das Verfahren zur Spracherkennung gemäß Anspruch 1, wobei das Bauteil eine im Fahrzeuginnenraum installierte Vorrichtung ist, die dazu konfiguriert ist, dem Benutzer Audioinformationen bereitzustellen.

4. Das Verfahren zur Spracherkennung gemäß einem der Ansprüche 1 bis 3, wobei die Steuerung Informationen bezüglich des geschätzten Zielbauteils ausgibt.

5. Das Verfahren zur Spracherkennung gemäß Anspruch 4, wobei die Steuerung Funktionsinformationen bezüglich einer Funktion des geschätzten Zielbauteils ausgibt.

6. Das Verfahren zur Spracherkennung gemäß Anspruch 4, wobei die Steuerung Bedieninformationen bezüglich eines Bedienvorgangs zum Nutzen einer Funktion des geschätzten Zielbauteils ausgibt.

7. Das Verfahren zur Spracherkennung gemäß Anspruch 1, wobei die Steuerung auf der Grundlage eines Schätzergebnisses des Zielbauteils den Betrieb des geschätzten Zielbauteils bewirkt.

8. Das Verfahren zur Spracherkennung gemäß Anspruch 7, wobei die Steuerung eine Benachrichtigung ausgibt, die den Benutzer zur Eingabe auffordert, ob das Zielbauteil betrieben werden soll oder nicht.

9. Das Verfahren zur Spracherkennung gemäß einem der Ansprüche 1 bis 8, wobei die Steuerung
eine Benutzerposition erfasst, wobei die Benutzerposition eine Position des Benutzers innerhalb des Fahrzeugs (1) ist, und
die erwähnte Position auf der Grundlage des Äußerungsinhalts und der Benutzerposition identifiziert.

10. Eine Spracherkennungsvorrichtung (7), die dazu konfiguriert ist, einen Äußerungsinhalt eines Benutzers eines Fahrzeugs (1) zu erfassen und ein Zielbauteil zu schätzen, wobei das Zielbauteil ein im Äußerungsinhalt erwähntes Bauteil unter einer Vielzahl von Bauteilen ist, die das Fahrzeug bilden, wobei die Spracherkennungsvorrichtung eine Steuerung (7) umfasst, die dazu konfiguriert ist, eine Verarbeitung durchzuführen, die Folgendes umfasst:
Identifizieren (S4) einer relativen Position des Bauteils in Bezug auf ein Messinstrument oder eine Lampe, die in einer Instrumententafel des Fahrzeugs installiert sind, in Bezug auf ein Lenkrad (40) des Fahrzeugs, in Bezug auf einen auf dem Lenkrad (40) des Fahrzeugs installierten Schalter oder in Bezug auf eine Position eines Fingers des Benutzers, wenn der Finger auf dem Lenkrad (40) des Fahrzeugs positioniert ist, als erwähnte Position auf der Grundlage des Äußerungsinhalts, wobei die erwähnte Position eine im Äußerungsinhalt erwähnte Position ist; und
Schätzen (S5) eines an der Bauteilposition installierten Bauteils, die der identifizierten erwähnten Position entspricht, als Zielbauteil unter Bezugnahme auf eine Speichervorrichtung (9), die Bauteilpositionen speichert, wobei jede der Bauteilpositionen eine Position ist, an der eines der Vielzahl von Bauteilen installiert ist, oder auf ein Lernmodell (16), das die Bauteilpositionen erlernt hat.

## Revendications

1. Procédé de reconnaissance vocale pour acquérir un contenu d'énonciation d'un utilisateur d'un véhicule (1) et estimer un objet cible, l'objet constitutif cible étant un objet constitutif mentionné dans le contenu d'énonciation parmi une pluralité d'objets constitutifs constituant le véhicule, le procédé de reconnaissance vocale amenant un contrôleur à exécuter un traitement comprenant :
identifier (S4), comme position mentionnée, sur la base du contenu d'énonciation, une position relative de l'objet constitutif par rapport à un compteur ou à une lampe installé(e) sur un tableau de bord du véhicule, par rapport à un volant (40) du véhicule, par rapport à un commutateur installé sur le volant (40) du véhicule, ou par rapport à la position d'un doigt de l'utilisateur lorsque le doigt est placé sur le volant (40) du véhicule, la position mentionnée étant une position mentionnée dans le contenu d'énonciation ; et
en se référant à un dispositif de stockage (9) stockant des positions d'objets constitutifs, chacune des positions d'objets constitutifs étant une position à laquelle l'un de la pluralité d'objets constitutifs est installé, ou à un modèle d'apprentissage (16) ayant appris les positions des objets constitutifs, estimer (S5), comme objet constitutif cible, un objet constitutif installé à la position d'objet constitutif correspondant à la position mentionnée identifiée.

2. Procédé de reconnaissance vocale selon la revendication 1, dans lequel l'objet constitutif est un dispositif installé à l'intérieur du véhicule et configuré pour présenter des informations visuelles à l'utilisateur.

3. Procédé de reconnaissance vocale selon la revendication 1, dans lequel l'objet constitutif est un dispositif installé à l'intérieur du véhicule et configuré pour présenter des informations audio à l'utilisateur.

4. Procédé de reconnaissance vocale selon l'une quelconque des revendications 1 à 3, dans lequel le contrôleur délivre des informations relatives à l'objet constitutif cible estimé.

5. Procédé de reconnaissance vocale selon la revendication 4, dans lequel le contrôleur délivre des informations de fonction relatives à une fonction de l'objet constitutif cible estimé.

6. Procédé de reconnaissance vocale selon la revendication 4, dans lequel le contrôleur délivre des informations de commande relatives à une commande permettant d'utiliser une fonction de l'objet constitutif cible estimé.

7. Procédé de reconnaissance vocale selon la revendication 1, dans lequel le contrôleur commande, sur la base d'un résultat d'estimation de l'objet constitutif cible, le fonctionnement de l'objet constitutif cible estimé.

8. Procédé de reconnaissance vocale selon la revendication 7, dans lequel le contrôleur délivre une notification invitant l'utilisateur à indiquer si l'objet constitutif cible doit ou non être mis en fonctionnement.

9. Procédé de reconnaissance vocale selon l'une quelconque des revendications 1 à 8, dans lequel
le contrôleur
détecte une position de l'utilisateur, la position de l'utilisateur étant une position de l'utilisateur à l'intérieur du véhicule (1), et
identifie, sur la base du contenu d'énonciation et de la position de l'utilisateur, la position mentionnée.

10. Dispositif de reconnaissance vocale (7) configuré pour acquérir un contenu d'énonciation d'un utilisateur d'un véhicule (1) et estimer un objet constitutif cible, l'objet constitutif cible étant un objet constitutif mentionné dans le contenu d'énonciation parmi une pluralité d'objets constitutifs constituant le véhicule, le dispositif de reconnaissance vocale comprenant un contrôleur (7) configuré pour exécuter un traitement comprenant :
identifier (S4), comme position mentionnée, sur la base du contenu d'énonciation, une position relative de l'objet constitutif par rapport à un compteur ou à une lampe installé(e) sur un tableau de bord du véhicule, par rapport à un volant (40) du véhicule, par rapport à un commutateur installé sur le volant (40) du véhicule, ou par rapport à la position d'un doigt de l'utilisateur lorsque le doigt est placé sur le volant (40) du véhicule, la position mentionnée étant une position mentionnée dans le contenu d'énonciation ; et
en se référant à un dispositif de stockage (9) stockant des positions d'objets constitutifs, chacune des positions d'objets constitutifs étant une position à laquelle l'un de la pluralité d'objets constitutifs est installé, ou à un modèle d'apprentissage (16) ayant appris les positions des objets constitutifs, estimer (S5), comme objet constitutif cible, un objet constitutif installé à la position d'objet constitutif correspondant à la position mentionnée identifiée.
